(19) Europäisches Patentamt
European Patent Office
Office européen des brevets

(11) **EP 3 435 108 B1**

(12) **EUROPÄISCHE PATENTSCHRIFT**

(45) Veröffentlichungstag und Bekanntmachung des Hinweises auf die Patenterteilung:
**09.10.2019 Patentblatt 2019/41**

(51) Int Cl.:
*G01S 5/02* *(2010.01)*        *A63B 29/02* *(2006.01)*
*G01C 21/20* *(2006.01)*

(21) Anmeldenummer: **17183273.6**

(22) Anmeldetag: **26.07.2017**

(54) **VERFAHREN ZUM SUCHEN EINES SENDEGERÄTS MIT EINEM SUCHGERÄT UND SUCHGERÄT ZUR DURCHFÜHRUNG EINES DERARTIGEN VERFAHRENS**

METHOD FOR DETECTING A TRANSMITTER WITH A SEARCH DEVICE AND SEARCH DEVICE FOR CARRYING OUT A METHOD OF THIS TYPE

PROCÉDÉ DE RECHERCHE D'UN APPAREIL D'ENVOI À L'AIDE D'UN APPAREIL DE RECHERCHE ET APPAREIL DE RECHERCHE DESTINÉ À EXÉCUTER UN TEL PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**30.01.2019 Patentblatt 2019/05**

(73) Patentinhaber: **Ortovox Sportartikel GmbH**
**82024 Taufkirchen (DE)**

(72) Erfinder:
• **Matzner, Rolf**
  **80639 München (DE)**
• **Monden, Philipp**
  **81924 München (DE)**

(74) Vertreter: **Hofstetter, Schurack & Partner**
**Patent- und Rechtsanwaltskanzlei**
**PartG mbB**
**Balanstrasse 57**
**81541 München (DE)**

(56) Entgegenhaltungen:
**EP-A1- 2 573 583     WO-A1-01/71388**

EP 3 435 108 B1

**Beschreibung**

Die vorliegende Erfindung betrifft ein Verfahren zum Suchen eines Sendegeräts mit einem Suchgerät, das mindestens eine Antenne zum Empfangen eines Sendesignals des Sendegeräts umfasst, wobei das Sendegerät mindestens eine Sendeantenne und das Sendesignal Sendepulse umfasst, wobei das Sendegerät eine Lagebestimmungsvorrichtung zur Bestimmung der Orientierung der mindestens einen Sendeantenne und das Suchgerät eine Lagebestimmungsvorrichtung zur Bestimmung der Orientierung des Suchgeräts umfasst, wobei das Verfahren folgende Schritte umfasst: Die magnetische Feldstärke des von der mindestens einen Sendeantenne des Sendegeräts ausgesendeten Felds wird in zumindest zwei Dimensionen durch das Suchgerät erfasst. Weiterhin wird die Orientierung der mindestens einen Sendeantenne des Sendegeräts bezogen auf ein vorgebbares Koordinatensystem ermittelt. Die Erfindung betrifft überdies ein Suchgerät zur Durchführung eines derartigen Verfahrens.

Ein derartiges Verfahren und ein derartiges Suchgerät sind bekannt aus der EP 2 573 583 A1. WO 01/71388 A1 offenbart ein Verfahren zur unterirdischen Lokalisierung eines Bohrkopfs, wobei Funksignale mittels einem Suchgerät empfangen werden; der Nickwinkel und der Rollwinkel werden auch vom Bohrkopf an das Suchgerät übertragen, um das Steuern des Bohrkopfs zu verbessern.

Die vorliegende Erfindung wird im Nachfolgenden am Beispiel eines Lawinen-Verschütteten-Suchgeräts näher erläutert. Sie ist jedoch ohne Einschränkungen auf andere Arten von Suchgeräten anwendbar, beispielsweise um in einem zerstörten Gebäude nach Personen zu suchen.

Bei der Suche nach Personen, welche durch eine Lawine verschüttet worden sind, ist es von Vorteil, elektronische Hilfsmittel, wie Lawinen-Verschütteten-Suchgeräte, zu benutzen. Bei der verschütteten Person befindet sich das Gerät im Sendemodus, im Nachfolgenden als Sendegerät bezeichnet. Dabei erzeugt es ein gepulstes magnetisches Wechselfeld, welches vom Suchgerät des Suchenden, welches sich im Suchmodus befindet, empfangen werden kann. Suchgerät und Sendegerät sind üblicherweise identisch aufgebaut, wobei zum Suchen eines Verschütteten das Gerät vom Sendemodus in den Suchmodus umgeschaltet werden kann. Im Suchgerät können Richtung und Stärke des Felds des vom Sendegerät gesendeten Sendesignals ermittelt werden. Jedoch ist das erzeugte Feld nicht radial und so weist die ermittelte Feldrichtung nicht direkt zum Verschütteten. Folgt der Suchende der Feldrichtung, läuft er auf der magnetischen Feldlinie, also in der Regel in einem Bogen auf den Verschütteten zu. Dies erfordert eine ständige Richtungskorrektur, hohe Aufmerksamkeit und einen erhöhten Zeitaufwand gegenüber einer direkten Bewegung zum Verschütteten.

Die genannte EP 2 573 583 A1 setzt sich die Ermittlung des direkten Wegs zum Verschütteten zum Ziel, indem das Feld an mehreren Stellen, beispielsweise entlang des Suchpfads des Suchenden, gemessen wird. Um dies zu ermöglichen, wird eine geometrische Beziehung der Bewegung des Suchenden zwischen den Messpunkten angenommen. Es hat sich herausgestellt, dass eine derartige Annahme häufig nicht präzise genug mit der Bewegung des Suchenden übereinstimmt. Dadurch ergibt sich noch Verbesserungsbedarf. Insbesondere besteht der Wunsch, den Führungsweg weiter zu optimieren, sodass die vom Suchenden zurückzulegende Strecke als auch die für den Suchvorgang benötigte Zeit signifikant weiter verkürzt werden kann, wodurch die Überlebenschancen einer verschütteten Person weiter verbessert werden können.

Eine andere Variante, die sich zum Ziel setzt, den direkten Weg vom Suchenden zum Verschütteten zu bestimmen, ist bekannt aus der CH 703 345 A2. Das dort beschriebene Verfahren verwendet im Suchgerät mindestens drei Empfängerspulen, die nicht koplanar angeordnet sind. Eine Verarbeitungseinheit verwendet mindestens fünf unabhängige Parameter, die aus dem von den Empfangsspulen erzeugten Messsignal abgeleitet sind, um die Position des Sendegeräts zu bestimmen. Ein Nachteil dieses Verfahrens beruht darin, dass aufgrund der hohen Anzahl an verwendeten Sende- und Empfangsspulen der Bedarf an bereitzustellender Energie sehr hoch ist. Dafür müssen Akkumulatoren mit hoher Leistung und damit einhergehend hohem Gewicht bereitgestellt werden, was insgesamt den Einsatz derartiger Geräte in der Praxis verschlechtert. Ein weiterer Nachteil besteht darin, dass die jeweils drei Antennen senkrecht zueinander angeordnet sein müssen, um in jeder Verschüttungslage das gewünschte Feld erzeugen zu können, wodurch sich eine in allen drei Raumrichtungen ähnliche Ausdehnung des Gehäuses, quasi ein würfelförmiges Gerät, ergibt. Dies ist unpraktisch und deshalb benutzerunfreundlich.

Die Aufgabe der vorliegenden Erfindung besteht deshalb darin, ein eingangs genanntes Verfahren zum Suchen eines Sendegeräts mit einem Suchgerät sowie ein entsprechendes Suchgerät bereitzustellen, sodass einerseits der Zeitbedarf für die Suche nach einem Verschütteten möglichst niedrig ist und andererseits das Gerät durch einen geringen Raumbedarf und ein niedriges Gewicht realisierbar ist.

Diese Aufgabe wird gelöst durch die Merkmale von Patentanspruch 1 sowie durch ein Suchgerät mit den Merkmalen von Patentanspruch 17.

Die vorliegende Erfindung beruht auf der Erkenntnis, dass die Bestimmung der Position der Quelle eines magnetischen Felds an einer beliebigen Stelle im Raum ermöglicht wird, wenn neben der Feldrichtung am Ort des Suchenden auch die Senderichtung mit einbezogen wird. Diese kann auf einfache Weise vom Sendegerät zum Suchgerät, beispielsweise per Funk, übertragen werden.

Das dreidimensionale Problem lässt sich auf zwei Dimensionen reduzieren. Im Allgemeinen befinden sich nämlich Sender und Empfänger an einer beliebigen Position im 3D-Raum und haben eine beliebige Orientierung. Die Orientierung des Empfängers bereitet keine Probleme, da am Ort des Empfängers die empfangene Feldrichtung dreidimensional bestimmt werden kann, unabhängig von seiner Orientierung. Die einzig wichtige Information über die Senderorientierung ist die Senderichtung. Das gesendete Feld ist nämlich um die Sendeachse radialsymmetrisch. Die Senderichtung und die gemessene Feldrichtung an der Position des Empfängers werden jeweils durch Vektoren repräsentiert.

In dem dreidimensionalen Raum lässt sich nun eine Ebene, d.h. ein zweidimensionales Objekt, definieren, die durch den Sendevektor und den Empfangsvektor aufgespannt wird. Da dem Empfänger, d.h. dem Suchgerät, beide Informationen vorliegen, kann dort die Lage der Ebene bestimmt werden und das Problem lässt sich in den zwei Dimensionen dieser Ebene lösen. Erfindungsgemäß wird deshalb die Orientierung der mindestens einen Sendeantenne des Sendegeräts an das Suchgerät übertragen (Schritt c)). Anschließend wird die in mindestens zwei Dimensionen erfasste magnetische Feldstärke in einen durch Betrag und Richtung definierten Feldstärkevektor umgerechnet (Schritt d)). Es wird eine Ebene definiert, die aufgespannt wird einerseits durch die Orientierung der Sendeantenne des Sendegeräts und andererseits durch die Richtung des Feldstärkevektors (Schritt e)). Als nächstes wird ein Winkel $\beta$ ermittelt, der den Winkel zwischen der Richtung des Feldstärkevektors und der Orientierung der Sendeantenne des Sendegeräts darstellt (Schritt f)). Anschließend wird mindestens eine potentielle Suchrichtung in der zuvor definierten Ebene aus den folgenden Zusammenhängen ermittelt:

$$\tan \varphi = 1/2 \tan \theta, \text{ und } \beta = \varphi + \theta,$$

wobei $\theta$ der Winkel zwischen der Orientierung der Sendeantenne des Sendegeräts einerseits und der Richtung vom Sendegerät zum Suchgerät in der zuvor definierten Ebene andererseits ist. $\varphi$ ist der Winkel zwischen der Richtung vom Sendegerät zum Suchgerät einerseits und der Richtung des zuvor berechneten Feldstärkevektors andererseits (Schritt g)). Anschließend wird das Sendegerät entlang der mindestens einen potentiellen Suchrichtung gesucht (Schritt h)).

Auf diese Weise wird mittels des dargestellten Verfahrens grundsätzlich die Möglichkeit bereitgestellt, das Sendegerät mittels des Suchgeräts auf direktem Weg zu suchen ohne die Notwendigkeit, eine Bewegungsrichtung des Suchenden anzunehmen oder das Suchgerät mit schwerem Equipment aufzurüsten.

Um die magnetische Feldstärke in Schritt a) in zumindest zwei Dimensionen zu erfassen, kann ein erfindungsgemäßes Suchgerät zumindest eine erste und eine zweite Antenne zum Empfangen des Sendesignals des Sendegeräts umfassen. Alternativ kann nur eine Antenne vorgesehen sein, wobei dann weiterhin Lagesensoren, insbesondere Rotationssensoren und/oder Beschleunigungssensoren, vorgesehen sind, mit denen eine Lageveränderung des Suchgeräts erfasst werden kann. In dem letzteren Fall ist es deshalb bevorzugt, wenn das Suchgerät bei der Suche geschwenkt wird.

Bevorzugt umfasst das Sendesignal mit einer bestimmten Sendepuls-Periode ausgestattete Sendepulse.

Im Nachfolgenden wird auf die Nummerierung der Schritte gemäß Anspruch 1 Bezug genommen.

Eine bevorzugte Ausführungsform zeichnet dadurch aus, dass Schritt g) folgenden Teilschritt umfasst: Auswerten der Gleichungen

$$\tan \varphi = 1/2 \tan \theta \text{ und } \beta = \varphi + \theta$$

zur Bestimmung von Werten für die Winkel $\varphi$ und $\theta$. In diesem Zusammenhang kann das Auswerten numerisch erfolgen oder durch Ermitteln der entsprechenden Werte aus einer zuvor im Suchgerät abgelegten Tabelle. Diese Variante zeichnet sich durch eine besonders präzise Bestimmung der Suchrichtung zum Sendgerät aus. Sie benötigt jedoch eine entsprechend ausgestattete Verarbeitungsvorrichtung im Suchgerät oder eine entsprechend ausgestattete Speichervorrichtung.

Kostengünstiger und nur geringfügig weniger präzise ist eine Variante, bei der Schritt g) folgenden Teilschritt umfasst: Setzen von

$$\varphi = \theta = \beta/2 = (\varphi + \theta)/2.$$

Wie sich durch Auswertung von Praxisbeispielen ergeben hat, liefert eine derartige Näherung mit hinreichender Genauigkeit eine potentielle Suchrichtung. Diese Variante lässt sich besonders kostengünstig, gewichtsoptimiert und bei kleinstmöglichem Bauraumbedarf umsetzen.

Bevorzugt umfasst Schritt h) folgenden Schritt: fortwährendes Ermitteln des Betrags des Feldstärkevektors, insbesondere Ermitteln eines lokalen Maximums des Betrags des Feldstärkevektors, entlang der Suchrichtung. Wird dieses Maximum gefunden, befindet sich das Suchgerät auf dem Weg entlang der potentiellen Suchrichtung in der nächstmöglichen Entfernung zum Sendegerät.

Alternativ oder zusätzlich kann Schritt h) folgenden Schritt umfassen: Ermitteln der Entfernung r zwischen dem Sendegerät und dem Suchgerät aus dem Ergebnis von Schritt f) und dem Zusammenhang

$$r = \sqrt[3]{\frac{IA}{4\pi h} \sqrt{(3cos^2\theta + 1)}},$$

wobei r die Entfernung zwischen Sendegerät und Suchgerät darstellt, I den Strom durch die Sendespule und A den Querschnitt der Sendespule und h den Betrag des Feldstärkevektors. Hierzu wird entweder im Allgemeinen der Betrag des Feldstärkevektors **h,** d.h. die Sendestärke, vom Sender per Funksignal an den Empfänger übertragen. Alternativ, und diese Variante ist insbesondere bei Lawinen-Verschütteten-Suchgeräten bevorzugt, sendet der Sender mit einer normierten Sendestärke. Empfängerseitig wird dann ein Senden mit der normierten Sendestärke angenommen. Diese braucht dann nicht übertragen zu werden. In einem Ausführungsbeispiel beträgt die normierte Sendestärke 7 dBµA/m in 10 m Entfernung, siehe hierzu auch die ETS 300 718.

Da naturgemäß bei der zuvor erwähnten Variante das Maximum erst erkannt wird, wenn sich der Betrag h des Feldstärkevektors wieder reduziert, und dies nur dadurch erkannt wird, dass fortlaufend der Betrag h des Feldstärkevektors am Suchgerät abgelesen wird oder dem Suchenden akustisch mitgeteilt wird, lässt sich dies durch die Berechnung der Entfernung r bei der zweiten Variante vermeiden. Insbesondere weiß der Suchende bei der zweiten Variante, wann er sich bereits Nahe an seinem Ziel, d.h. dem Verschütteten, befindet. Bis in die Nähe des Ziels, beispielsweise 5 m, kann er sich mit verhältnismäßig großer Geschwindigkeit vorwärtsbewegen. Befindet er sich in einer Entfernung von weniger als 5 m vom Ziel, kann er die Suchgeschwindigkeit zu Erzielung einer größeren Genauigkeit und Zuverlässigkeit rechtzeitig reduzieren. Ein Überlaufen des Ziels ist daher im Wesentlichen ausgeschlossen. Die Suchdauer kann dadurch entscheidend reduziert werden.

Schritt a) umfasst bevorzugt weiterhin den Schritt des Ermittelns der Raumlage des Suchgeräts bezogen auf das vorgebbare Koordinatensystem. Auf diese Weise kann die Raumlage des Suchgeräts mit der Orientierung der mindestens einen Sendeantenne des Sendegeräts zueinander in Relation gesetzt werden.

In diesem Zusammenhang umfasst Schritt g) bevorzugt weiterhin folgenden Schritt: Transformieren der in Schritt g) in der Ebene ermittelten Suchrichtung auf das vorgebbare Koordinatensystem. Auf diese Weise lässt sich die Suchrichtung mit Bezug auf das vorgebbare Koordinatensystem beispielsweise auf einer Anzeigevorrichtung des Suchgeräts anzeigen.

Eine besonders bevorzugte Kategorie von Weiterbildungen umfasst den weiteren Schritt i), wonach die Mehrdeutigkeiten der ermittelten potentiellen Suchrichtung durch mindestens zwei Messungen aufgelöst werden. In diesem Zusammenhang umfasst bei einer ersten Variante Schritt i) folgende Prüfschritte:

i1) Ermitteln einer potentiellen Suchrichtung und der Entfernung zwischen Suchgerät und Sendegerät, wobei sich das Suchgerät an einem ersten Messpunkt befindet;
i2) Bewegen des Suchgeräts an zumindest einen zweiten Messpunkt;
i3) Ermitteln einer potentiellen Suchrichtung und der Entfernung zwischen Suchgerät und Sendegerät, wobei sich das Suchgerät an dem zweiten Messpunkt befindet; und
i4) Auswerten der ermittelten potentiellen Suchrichtung und Entfernungen und Bestimmen der tatsächlichen Suchrichtung.

Besonders bevorzugt umfasst Schritt i4) folgende Prüfschritte:

- Nimmt bei einer Bewegung des Suchgeräts in die ermittelte Suchrichtung die Entfernung zu, während sich die ermittelte Suchrichtung oder die Feldrichtung höchstens um einen vorgebbaren Winkel ändert, ist die tatsächliche Suchrichtung zur ermittelten Suchrichtung um 180° gedreht;
- Nimmt bei einer Bewegung des Suchgeräts in die ermittelte Suchrichtung die Entfernung ab, während sich die ermittelte Suchrichtung oder die Feldrichtung nicht oder höchstens um einen vorgebbaren Winkel ändert, ist die tatsächliche Suchrichtung gleich der ermittelten Suchrichtung;
- ändert sich bei einer Bewegung des Suchgeräts (R) in die ermittelte Suchrichtung die Entfernung höchstens um einen vorgebbaren Betrag, während sich die ermittelte Suchrichtung oder die Feldrichtung um mindestens einen vorgebbaren Winkel ändert, ist die tatsächliche Suchrichtung zur ermittelten Suchrichtung um 90° nach rechts gedreht, wenn sich die ermittelte Suchrichtung oder die Feldrichtung im Uhrzeigersinn dreht, oder

ist die tatsächliche Suchrichtung zur ermittelten Suchrichtung um 90° nach links gedreht, wenn sich die ermittelte Suchrichtung oder die Feldrichtung gegen den Uhrzeigersinn dreht.

Bei einem Suchgerät, bei dem die Mehrdeutigkeit durch einen Benutzer, quasi manuell, aufgelöst wird, wird demnach eine Änderung oder ein Gleichbleiben der ermittelten Suchrichtung vom Benutzer ausgewertet. Bei einem Suchgerät, bei dem die Mehrdeutigkeit durch das Suchgerät automatisch aufgelöst wird, wird demnach bereits eine Änderung oder ein Gleichbleiben der Feldrichtung (vom Suchgerät) ausgewertet. Dem Benutzer wird dann bereits die korrigierte Suchrichtung angezeigt.

Diese Variante benötigt zum Auflösen der Mehrdeutigkeit der ermittelten Suchrichtung lediglich ein Suchgerät. Um die genannten Auswertungsschritte vorzunehmen, genügt eine Bewegung des Suchgeräts um wenige Meter, beispielsweise 5 m. Der vorgebbare Winkel beträgt bevorzugt zwischen 5° und 10°.

Alternativ kann vorgesehen sein, dass ein Phasenbezug zwischen dem vom Sendegerät gesendeten Signal und dem vom Suchgerät empfangenen Signal ermittelt und ausgewertet wird, Hierzu muss entweder der Empfänger ermitteln, zu welchem Zeitpunkt das Sendesignal welche Phase hat, oder der Sender muss ermitteln, zu welchem Zeitpunkt der Empfänger welche Phase misst, und diese Information an den Empfänger übertragen, wobei Schritt i4) dann folgende Schritte umfasst:

- Auswählen aufgrund des Phasenbezugs einer ersten und einer zweiten potentiellen Suchrichtung; und:

  - Nimmt bei einer Bewegung des Suchgeräts in die erste oder die zweite potentielle Suchrichtung die Entfernung zu, ist die tatsächliche Suchrichtung zur gewählten Suchrichtung um 180° gedreht;
  - Nimmt bei einer Bewegung des Suchgeräts in die erste oder die zweite potentielle Suchrichtung die Entfernung ab, ist die tatsächliche Suchrichtung gleich der gewählten Suchrichtung.

Der Vorteil dieses Verfahrens besteht darin, dass keine Winkeländerung auszuwerten ist, sondern bereits aufgrund einer Entfernungsauswertung festgestellt werden kann, welche potentielle Suchrichtung die tatsächliche Suchrichtung darstellt.

Gemäß einer weiteren Variante umfasst Schritt i) folgende Prüfschritte:

i5) Durchführen der Schritte a) bis g) für ein erstes Suchgerät;
i6) Durchführen der Schritte a) bis g) für mindestens ein zweites Suchgerät (R2); i7) Ermitteln der Positionen des ersten und des mindestens einen zweiten Suchgeräts (R1, R2);
i8) Ermitteln von potentiellen Positionen des Sendegeräts (T) aus den Ergebnissen von Schritt i5), i6) und i7);
i9) Auswählen eines übereinstimmenden Werts für eine in Schritt i8) ermittelte potentielle Position des Sendegeräts (T) und Ableiten der tatsächlichen Suchrichtung für das erste und/oder das zweite Suchgerät (R1, R2).

Diese Variante basiert auf der Verwendung von zwei Suchgeräten und hat den Vorteil, dass keine Winkel- oder Entfernungsänderungen erfasst und bewertet werden müssen. Vielmehr können die von dem ersten Suchgerät ermittelten potentiellen Suchrichtungen mit denen vom zweiten Suchgerät ermittelten Positionen verglichen und auf eine Übereinstimmung hin überprüft werden. Zu diesem Zweck können das erste und das zweite Suchgerät die jeweils von ihnen ermittelten potentiellen Suchrichtungen beispielsweise per Funk austauschen.

Bevorzugt umfasst das erfindungsgemäße Verfahren weiterhin folgenden Schritt: j) Anzeigen der ermittelten Suchrichtung oder der ermittelten Suchrichtung zusammen mit der ermittelten Entfernung zwischen Suchgerät und Sendegerät auf einer Anzeigevorrichtung des Suchgeräts. Dadurch kann der Suchende besonders einfach zum Sendegerät geführt werden, wobei Irrwege und damit Zeitverlust vermieden werden können.

Bevorzugt wird als vorgebbares Koordinatensystem ein Koordinatensystem definiert durch die Erdmagnetfeld-Nord-Achse und die Erdbeschleunigung verwendet. Alternativ kann auch mit Funkbaken, die am Rand des Suchfelds positioniert sind, ein Koordinatensystem erzeugt werden.

Zur Übertragung in Schritt c) wird bevorzugt eine Trägerfrequenz von 868 MHz und/oder 2,4 GHz verwendet.

Weitere vorteilhafte Ausführungsformen ergeben sich aus den Unteransprüchen.

Die im Zusammenhang mit dem erfindungsgemäßen Verfahren vorgestellten bevorzugten Ausführungsformen und deren Vorteile gelten entsprechend, soweit anwendbar, für ein erfindungsgemäßes Suchgerät zur Durchführung eines derartigen Verfahrens.

Im Nachfolgenden wird nunmehr ein Ausführungsbeispiel der vorliegenden Erfindung unter Bezugnahme auf die beigefügten Zeichnungen näher beschrieben. Diese zeigen:

Fig. 1    zur Erläuterung des erfindungsgemäßen Verfahrens diverse Größen in einer Ebene, die durch den Sende- und den Empfangsvektor aufgespannt wird;

Fig. 2    den Verlauf der Winkel $\varphi$ und $\theta$ sowie $(\varphi+\theta)/2$ in Abhängigkeit des Winkels $\beta$;

Fig. 3    eine perspektivische Darstellung zur Erläuterung des Näherungsverfahrens, bei der die Suchrichtung gleich $\beta/2$ gewählt wird; und

Fig. 4    eine schematische Darstellung zur Erläuterung unterschiedlicher Methoden zur Auflösung von Mehrdeutigkeiten hinsichtlich der ermittelten Suchrichtung.

In den nachfolgenden Ausführungen sind Vektoren in Fettdruck dargestellt, während die Beträge von Vektoren normal gedruckt sind. Alternativ können Vektoren auch durch einen Pfeil über einem Buchstaben oder durch Kursivdruck gekennzeichnet werden.

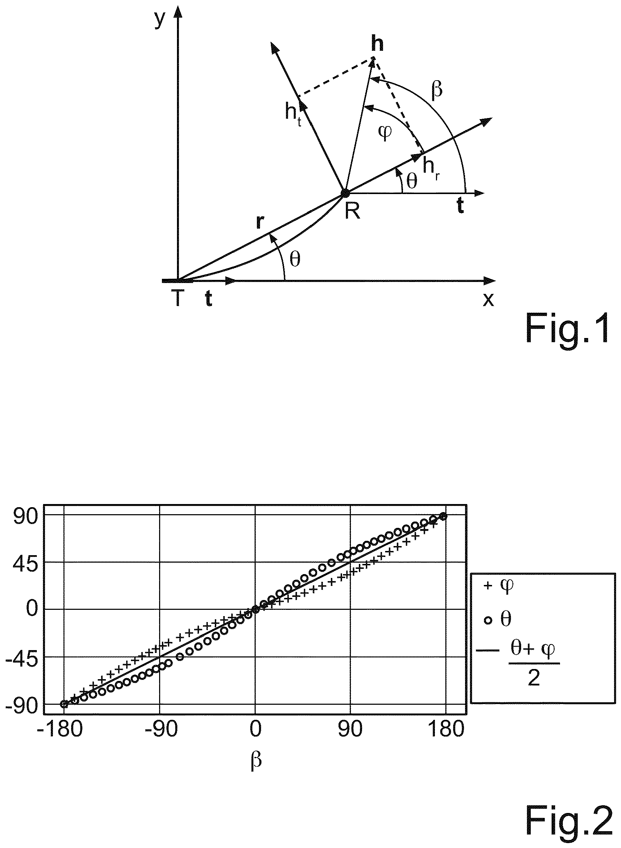

Fig. 1 zeigt eine schematische Darstellung zur Erläuterung des erfindungsgemäßen Verfahrens. Der Sender trägt die Bezeichnung "T", der Empfänger die Bezeichnung "R". "**t**" bezeichnet den Sendevektor **t** eines magnetischen Dipols am Ort des Senders T. "**h**" bezeichnet den Magnetfeldstärkevektor **h** am Ort des Empfängers R, aufgeteilt in eine radiale **h$_r$** sowie eine tangentiale Feldkomponente **ht**. "**r**" bezeichnet den Richtungsvektor vom Sender T zum Empfänger R. Die Senderichtung fällt demnach mit der x-Achse zusammen. "$\theta$" bezeichnet den Winkel zwischen dem Sendevektor **t** und dem Richtungsvektor **r**. "$\varphi$" bezeichnet den Winkel zwischen dem Richtungsvektor **r** und dem Magnetfeldstärkevektor **h**. "$\beta$" bezeichnet den Winkel zwischen dem Sendevektor **t** und dem Magnetfeldstärkevektor **h**. Fig. 1 zeigt demnach eine im dreidimensionalen Raum definierte Ebene, die durch den Sendevektor **t** und den Magnetfeldstärkevektor **h** aufgespannt wird. Ohne Beschränkung der Allgemeinheit wurde in der Ebene ein Koordinatensystem definiert, in dem der Sender T im Ursprung liegt und der Sendevektor **t** entlang der x-Achse orientiert ist.

Wendet man die bekannten Gleichungen für magnetische Dipole, siehe beispielsweise https://de.wikipedia.org/wiki/Magnetischer_Dipol, an, so ergibt sich für die magnetische Flussdichte **b** am Ort des Empfängers R

$$b(r) = \frac{\mu_0}{4\pi r^2} \frac{3r(t \cdot r) - tr^2}{r^3} \qquad (0)$$

mit

$\mu_0$: magnetische Permeabilität im Vakuum,
$\pi$: Kreiszahl.

Im Vakuum ergibt sich

$$b = \mu_0 h.$$

Der Sendevektor t wird erzeugt, indem ein Strom I um die Fläche A läuft. Es gilt:

$$t = IA.$$

Durch Einsetzen in die Gleichung (0) und Zerlegung in die Feldkomponenten ergibt sich

$$h_r = \frac{IA}{2\pi r^3}\cos(\theta), \qquad h_t = \frac{IA}{4\pi r^3}\sin(\theta) \qquad (1)$$

und die Feldstärke oder der Betrag des Feldvektors zu

$$h = \frac{IA}{4\pi r^3}\sqrt{(3cos^2\theta + 1)} \qquad (2).$$

Aus der Gleichung (2) lässt sich leicht die Entfernung des Senders vom Suchenden, d.h. der Betrag des Vektors r, ermitteln zu

$$r = \sqrt[3]{\frac{IA}{4\pi h} \sqrt{(3cos^2\theta + 1)}} \qquad (3).$$

Aus der Gleichung (1) ergibt sich folgender Zusammenhang zwischen dem Winkel θ und dem Winkel φ:

$$\tan\varphi = \frac{h_t}{h_r} = \frac{1}{2}\tan\theta \qquad (4).$$

Die nachfolgenden Ausführungen gehen davon aus, dass zumindest die Senderichtung vom Sendegerät T zum Suchgerät R per Funk übertragen wurde. Damit ist am Ort des Empfängers R neben dem Magnetfeldstärkevektor **h** auch der Sendevektor **t** bekannt.

Ist die Sendestärke empfängerseitig durch Vereinbarung bekannt, genügt die Übertragung der Richtung des Sendevektors.

Wie sich aus Fig. 1 ergibt, ist jedoch am Ort des Empfängers R aus der Messung des Feldstärkevektors **h** und der Übertragung des Sendevektors **t** bekannt nur der Winkel β, d.h. die Summe der Winkel θ und φ. Die Winkel θ und φ lassen sich daraus nicht geschlossen berechnen. Der Zusammenhang kann allerdings beispielsweise numerisch ermittelt werden, indem aus einigen Werten von θ mittels der Gleichung (4) der zugehörige Winkel φ und daraus die Summe bestimmt wird.

Fig. 2 zeigt in diesem Zusammenhang den Verlauf der Winkel θ, φ sowie (θ+φ)/2 in Abhängigkeit des gemessenen Winkels β.

Es lässt sich leicht erkennen, dass sowohl der Winkel φ als auch der Winkel θ näherungsweise halb so groß sind wie der Winkel β. Ist die Senderichtung und die Feldrichtung also bekannt, lässt sich daraus die direkte Richtung zum Verschütteten mit beliebiger Genauigkeit numerisch oder aus einer Tabelle oder angenähert über den halben Winkel (θ+φ)/2 bestimmen.

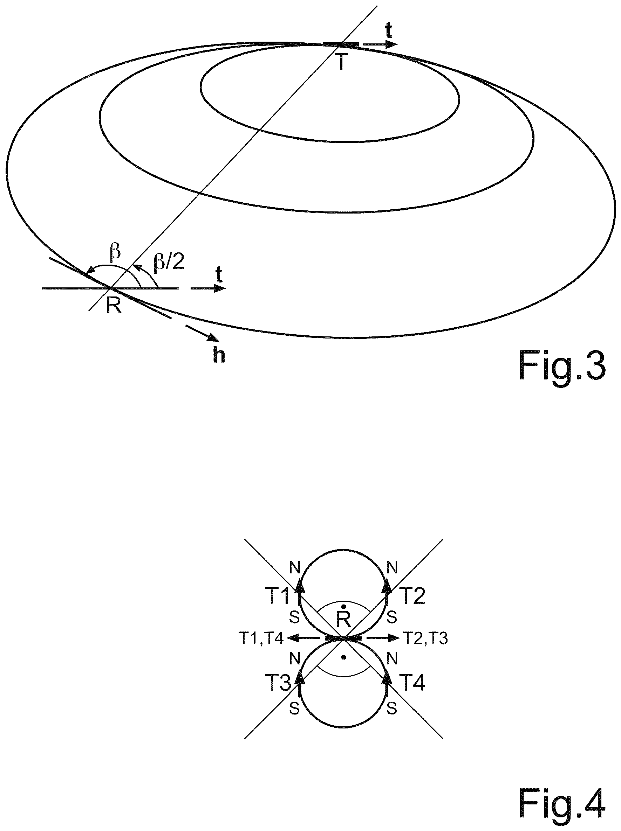

In Fig. 3 ist eine perspektivische Darstellung zur Erläuterung des Näherungsverfahrens gezeigt, bei dem die Suchrichtung gleich β/2 gewählt wird. Wie deutlich zu erkennen ist, führt die Suchrichtung gleich β/2 auf direktem Wege zum Ort des Senders T.

Fig. 4 zeigt eine Darstellung mit vier unterschiedlichen Sendern T1, T2, T3 und T4, um die Problematik der sich bei dem zuvor geschilderten Verfahren ergebenden Mehrdeutigkeiten zu erläutern. Das von den Sendern T1 und T4 erzeugte Feld ist am vom Ort des Empfängers R nicht unterscheidbar. Beide empfangenen Feldrichtungen sind in der Darstellung nach links, in dem Fall nach Westen, orientiert, obwohl sich die Sender T1 und T4 an unterschiedlichen Orten befinden. Die zuvor ermittelte Richtung zum Verschütteten ist daher nicht eindeutig, sondern kann auch um 180° verdreht sein. Diese Mehrdeutigkeit lässt sich in der Praxis leicht auflösen, da bei Bewegung auf den falschen Sender zu die ermittelte Entfernung zunimmt und bei Bewegung auf den richtigen Sender zu abnimmt.

Es ist eine weitere Mehrdeutigkeit zu berücksichtigen: Das Feld des Senderpaars T1/T4 unterscheidet sich von dem des Senderpaars T2/T3 nur durch den absoluten Phasenbezug. Das Paar T2/T3 verursacht ein empfangenes Feld Richtung Osten, das Paar T1, T4 Richtung Westen. Ist es möglich, einen Phasenbezug betreffend ein Wechselfeld zwischen dem gesendeten Signal und dem empfangenen Signal herzustellen, lässt sich das betreffende Senderpaar auswählen. Dazu muss entweder der Empfänger wissen, zu welchem Zeitpunkt das Sendesignal welche Phase hat, oder der Sender muss wissen, zu welchem Zeitpunkt der Empfänger welche Phase misst. Die letztgenannte Information muss dann natürlich wieder an den Empfänger übertragen werden.

Wird der absolute Phasenbezug jedoch nicht übertragen, müssen zusätzlich zu den Sendern T1 und T4 also auch die Sender T2 und T3 in Betracht gezogen werden. Zwischen den Richtungen vom Empfänger R zu den Sendern T1 und T2 liegt, wie schematisch eingezeichnet, ein Winkel von 90°. Entsprechendes gilt für die Sender T1 und T4. Ändert sich bei einer Bewegung des Suchgeräts auf einen dieser Sender, zu die Entfernung nur wenig, während sich die gemessene Feldrichtung jedoch stark ändert, ist die tatsächliche Suchrichtung zur ermittelten Suchrichtung um 90° gedreht. Folgende zwei Fälle sind zu unterscheiden. Ändert sich die empfangene Feldrichtung im Uhrzeigersinn, so ist die tatsächliche Suchrichtung zur ermittelten Suchrichtung um 90° nach rechts gedreht. Ändert sich die empfangene Feldrichtung gegen den Uhrzeigersinn, so ist die tatsächliche Suchrichtung zur ermittelten Suchrichtung um 90° nach links gedreht.

Bewegt man sich also beispielsweise auf den Sender T1 zu, obwohl der Sender T2 der tatsächliche Sender ist, dreht sich das Feld im Uhrzeigersinn. Ist der Sender T3 der tatsächliche Sender, dreht sich das Feld gegen den Uhrzeigersinn. Sind die Sender T1 oder T4 die tatsächlichen Sender, ändert sich die Feldrichtung nicht.

Die entsprechenden Entfernungs- bzw. Richtungsänderungen können bei entsprechender Bewegung des Suchenden erfasst und durch den Suchenden oder automatisch, durch einen entsprechend programmierten Mikrocontroller im Suchgerät, ausgewertet werden. Damit lassen sich auf einfache Weise Mehrdeutigkeiten ausschließen. Aus der Vielzahl potentieller Suchrichtungen lässt sich die tatsächliche Suchrichtung bestimmen.

Damit die vom Sender T zum Empfänger R übertragene Senderichtung im Empfänger R ausgewertet werden kann, benötigen beide Geräte T, R ein gemeinsames Koordinatensystem. Dieses Koordinatensystem kann beispielsweise mittels eines Kompasses, der in beiden Geräten T, R verbaut ist, erzeugt werden. Der Sender T beschreibt dann die Senderichtung m gemeinsamen Koordinatensystem und der Empfänger R kann die Senderichtung in sein lokales System umrechnen. Bevorzugt wird die Senderichtung **t** vom Sender T auf ein Anfragesignal des Empfängers R hin übermittelt. Bevorzugt wird hierzu eine Trägerfrequenz von 868 MHz oder 2,4 GHz verwendet.

Alternativ zur Auflösung der Mehrdeutigkeit durch Bewegung und Messung an mindestens zwei Stellen kann, wie bereits erwähnt, der Phasenbezug des senderseitigen Wechselfelds übermittelt und bei der Auswertung im Empfänger R berücksichtigt werden. Eine weitere Variante besteht darin, dass die potentiellen Suchrichtungen von mindestens zwei unterschiedlichen Suchgeräten R1, R2 ermittelt und verglichen werden. Dabei gibt der übereinstimmende Wert die tatsächliche Suchrichtung wieder. Hierzu ist es nötig, dass zumindest eines der Suchgeräte oder eine weitere Instanz neben den von mindestens zwei Suchgeräten ermittelten Suchrichtungen auch den Ort der entsprechenden Suchgeräte kennt. Zu diesem Zweck wird deshalb auch die entsprechende Ortsinformation übertragen. Dazu können beispielsweise entsprechende GPS-Signale ausgewertet werden. Alternativ kann das Suchfeld mit entsprechenden Sendebaken begrenzt werden, wobei das jeweilige Suchgerät seine Position innerhalb des durch die Sendebaken definierten Suchfelds durch Auswertung von Laufzeitunterschieden von Signalen von bzw. zu den Sendebaken bestimmt.

## Patentansprüche

1. Verfahren zum Suchen eines Sendegeräts (T) mit einem Suchgerät (R), das mindestens eine Antenne zum Empfangen eines Sendesignals des Sendegeräts (T) umfasst, wobei das Sendegerät (T) mindestens eine Sendeantenne und das Sendesignal Sendepulse umfasst, wobei das Sendegerät (T) eine Lagebestimmungsvorrichtung zur Bestimmung der Orientierung (**t**) der mindestens einen Sendeantenne und das Suchgerät (R) eine Lagebestimmungsvorrichtung zur Bestimmung der Orientierung des Suchgeräts (R) umfasst,
folgende Schritte umfassend:

   a) Erfassen der magnetischen Feldstärke (**h**) des von der mindestens einen Sendeantenne des Sendegeräts (T) ausgesendeten Felds in zumindest zwei Dimensionen ($h_t$, $h_r$) durch das Suchgerät (R);.
   b) Ermitteln der Orientierung (**t**) der mindestens einen Sendeantenne des Sendegeräts (T) bezogen auf ein vorgebbares Koordinatensystem;
   c) Übertragen der Orientierung (**t**) der mindestens einen Sendeantenne des Sendegeräts (T) an das Suchgerät (R);
   d) Umrechnen der in Schritt a) in mindestens zwei Dimensionen ($h_t$, $h_r$) erfassten magnetischen Feldstärke (**h**) in einen durch Betrag und Richtung definierten Feldstärkevektor (**h**);
   e) Definieren einer Ebene, die aufgespannt wird einerseits durch die Orientierung (**t**) der Sendeantenne des Sendegeräts (T) und andererseits durch die Richtung des in Schritt d) berechneten Feldstärkevektors (**h**);
   f) Ermitteln eines Winkels β als den Winkel zwischen der in Schritt d) ermittelten Richtung des Feldstärkevektors (**h**) und der Orientierung (**t**) der Sendeantenne des Sendegeräts (T);
   g) Ermitteln mindestens einer potentiellen Suchrichtung in der in Schritt e) definierten Ebene aus den Zusammenhängen:

$$\tan \varphi = 1/2 \tan \theta,$$

   und

$$\beta = \varphi + \theta,$$

   wobei θ der Winkel zwischen der Orientierung (**t**) der Sendeantenne des Sendegeräts (T) einerseits und der Richtung vom Sendegerät (T) zum Suchgerät (R) in der in Schritt e) definierten Ebene andererseits ist; und φ der Winkel zwischen der Richtung vom Sendegerät (T) zum Suchgerät (R) einerseits und der Richtung des in Schritt d) berechneten Feldstärkevektors (**h**) andererseits;
   und
   h) Suchen des Sendegeräts (T) entlang der mindestens einen potentiellen Suchrichtung.

2. Verfahren nach Anspruch 1,
   **dadurch gekennzeichnet,**
   **dass** Schritt g) folgenden Teilschritt umfasst:

   Auswerten der Gleichungen

$$\tan \varphi = 1/2 \tan \theta,$$

   und

$$\beta = (\varphi + \theta)$$

   zur Bestimmung von Werten für die Winkel $\varphi$ und $\theta$.

3. Verfahren nach Anspruch 2,
   **dadurch gekennzeichnet,**
   **dass** das Auswerten numerisch erfolgt oder durch Ermitteln der entsprechenden Werte aus einer zuvor im Suchgerät (R) abgelegten Tabelle.

4. Verfahren nach Anspruch 1,
   **dadurch gekennzeichnet,**
   **dass** Schritt g) folgenden Teilschritt umfasst:

$$\text{Setzen von } \varphi = \theta = \beta/2 = (\varphi + \theta)/2$$

5. Verfahren nach einem der vorhergehenden Ansprüche,
   **dadurch gekennzeichnet,**
   **dass** Schritt h) folgenden Schritt umfasst:
   Fortwährendes Ermitteln des Betrags des Feldstärkevektors (**h**), insbesondere Ermitteln eines lokalen Maximums des Betrags des Feldstärkevektors (h), entlang der Suchrichtung.

6. Verfahren nach einem der Ansprüche 1 bis 4,
   **dadurch gekennzeichnet,**
   **dass** Schritt h) folgenden Schritt umfasst:

   Ermitteln der Entfernung (r) zwischen dem Sendegerät (T) und dem Suchgerät (R) aus dem Ergebnis von Schritt f) und dem Zusammenhang:

$$r = \sqrt[3]{\frac{IA}{4\pi h}\sqrt{(3cos^2\theta + 1)}},$$

   wobei r die Entfernung zwischen Sendegerät (T) und Suchgerät (R), I der Strom durch die Sendespule und A der Querschnitt der Sendespule ist.

7. Verfahren nach einem der vorhergehenden Ansprüche,
   **dadurch gekennzeichnet,**
   **dass** Schritt a) weiterhin den folgenden Schritt umfasst:
   Ermitteln der Raumlage des Suchgeräts (R) bezogen auf das vorgebbare Koordinatensystem.

8. Verfahren nach Anspruch 7,
   **dadurch gekennzeichnet,**
   **dass** Schritt g) weiterhin folgenden Schritt umfasst:
   Transformieren der in Schritt g) in der Ebene ermittelten Suchrichtung auf das vorgebbare Koordinatensystem.

**9.** Verfahren nach einem der vorhergehenden Ansprüche,
**gekennzeichnet durch** folgenden weiteren Schritt:
i) Auflösen von Mehrdeutigkeiten der ermittelten Suchrichtung durch mindestens zwei Messungen.

**10.** Verfahren nach Anspruch 9,
**dadurch gekennzeichnet,**
**dass** Schritt i) folgende Prüfschritte umfasst:

i1) Ermitteln einer potentiellen Suchrichtung und der Entfernung zwischen Suchgerät (R) und Sendegerät (T), wobei sich das Suchgerät (R) an einem ersten Messpunkt befindet;
i2) Bewegen des Suchgeräts (R) an zumindest einen zweiten Messpunkt;
i3) Ermitteln einer potentiellen Suchrichtung und der Entfernung zwischen Suchgerät (R) und Sendegerät (T), wobei sich das Suchgerät (R) an dem zweiten Messpunkt befindet;
i4) Auswerten der ermittelten potentiellen Suchrichtungen und Entfernungen und Bestimmen der tatsächlichen Suchrichtung.

**11.** Verfahren nach Anspruch 10,
**dadurch gekennzeichnet,**
**dass** Schritt i4) folgende Prüfschritte umfasst:

- nimmt bei einer Bewegung des Suchgeräts (R) in die ermittelte Suchrichtung die Entfernung zu, während sich die ermittelte Suchrichtung oder die Feldrichtung höchstens um einen vorgebbaren Winkel ändert, ist die tatsächliche Suchrichtung zur ermittelten Suchrichtung um 180° gedreht;
- nimmt bei einer Bewegung des Suchgeräts (R) in die ermittelte Suchrichtung die Entfernung ab, während sich die ermittelte Suchrichtung oder die Feldrichtung nicht oder höchstens um einen vorgebbaren Winkel ändert, ist die tatsächliche Suchrichtung gleich der ermittelten Suchrichtung;
- ändert sich bei einer Bewegung des Suchgeräts (R) in die ermittelte Suchrichtung die Entfernung höchstens um einen vorgebbaren Betrag, während sich die ermittelte Suchrichtung oder die Feldrichtung um mindestens einen vorgebbaren Winkel ändert,

ist die tatsächliche Suchrichtung zur ermittelten Suchrichtung um 90° nach rechts gedreht, wenn sich die ermittelte Suchrichtung oder die Feldrichtung im Uhrzeigersinn dreht, oder
ist die tatsächliche Suchrichtung zur ermittelten Suchrichtung um 90° nach links gedreht, wenn sich die ermittelte Suchrichtung oder die Feldrichtung gegen den Uhrzeigersinn dreht.

**12.** Verfahren nach Anspruch 11,
**dadurch gekennzeichnet,**
**dass** ein Phasenbezug zwischen dem vom Sendegerät gesendeten Signal und dem vom Suchgerät empfangenen Signal ermittelt und ausgewertet wird, wobei Schritt i4) folgende Schritte umfasst:

- Auswählen aufgrund des Phasenbezugs einer ersten und einer zweiten potentiellen Suchrichtung; und
- nimmt bei einer Bewegung des Suchgeräts (R) in die erste oder die zweite potentielle Suchrichtung die Entfernung zu, ist die tatsächliche Suchrichtung zur gewählten Suchrichtung um 180° gedreht,
- nimmt bei einer Bewegung des Suchgeräts (R) in die erste oder die zweite potentielle Suchrichtung die Entfernung ab, ist die tatsächliche Suchrichtung gleich der gewählten Suchrichtung.

**13.** Verfahren nach Anspruch 9,
**dadurch gekennzeichnet,**
**dass** Schritt i) folgende Prüfschritte umfasst:

i5) Durchführen der Schritte a) bis g) für ein erstes Suchgerät (R1);
i6) Durchführen der Schritte a) bis g) für mindestens ein zweites Suchgerät (R2);
i7) Ermitteln der Positionen des ersten und des mindestens einen zweiten Suchgeräts (R1, R2);
i8) Ermitteln von potentiellen Positionen des Sendegeräts (T) aus den Ergebnissen von Schritt i5), i6) und i7);
i9) Auswählen eines übereinstimmenden Werts für eine in Schritt i8) ermittelte potentielle Position des Sendegeräts (T) und Ableiten der tatsächlichen Suchrichtung für das erste und/oder das zweite Suchgerät (R1, R2).

**14.** Verfahren nach einem der vorhergehenden Ansprüche,

**gekennzeichnet durch** folgenden weiteren Schritt:
j) Anzeigen der ermittelten Suchrichtung oder
der ermittelten Suchrichtung und der ermittelten Entfernung zwischen Suchgerät (R) und Sendegerät (T)
auf einer Anzeigevorrichtung des Suchgeräts (R).

**15.** Verfahren nach einem der vorhergehenden Ansprüche,
**dadurch gekennzeichnet,**
**dass** als vorgebbares Koordinatensystem das ein Koordinatensystem definiert durch die Erdmagnetfeld-Nord-Achse und die Erdbeschleunigung verwendet wird.

**16.** Verfahren nach einem der vorhergehenden Ansprüche,
**dadurch gekennzeichnet,**
**dass** zur Übertragung in Schritt c) eine Trägerfrequenz von 868 MHz und/oder 2,4 GHz verwendet wird.

**17.** Suchgerät zur Durchführung eines Verfahrens nach einem der vorhergehenden Ansprüche.

**Claims**

**1.** A method for searching a transmitter (T) with a detector (R) including at least one antenna for receiving a transmit signal of the transmitter (T), wherein the transmitter (T) includes at least one transmitting antenna and the transmit signal includes transmit pulses, wherein the transmitter (T) includes a pose determining device for determining the orientation (t) of the at least one transmitting antenna and the detector (R) includes a pose determining device for determining the orientation of the detector (R),
including the following steps:

a) acquiring the magnetic field strength (h) of the field emitted by the at least one transmitting antenna of the transmitter (T) in at least two dimensions (ht, $h_r$) by the detector (R);
b) ascertaining the orientation (t) of the at least one transmitting antenna of the transmitter (T) related to a presettable coordinate system;
c) transferring the orientation (t) of the at least one transmitting antenna of the transmitter (T) to the detector (R);
d) converting the magnetic field strength (h) acquired in step a) in at least two dimensions ($h_t$, $h_r$) into a field strength vector (h) defined by magnitude and direction;
e) defining a plane, which is spanned by the orientation (t) of the transmitting antenna of the transmitter (T) on the one hand and by the direction of the field strength vector (h) calculated in step d) on the other hand;
f) ascertaining an angle $\beta$ as the angle between the direction of the field strength vector (h) ascertained in step d) and the orientation (t) of the transmitting antenna of the transmitter (T);
g) ascertaining at least one potential search direction in the plane defined in step e) from the relations:

$$\tan \varphi = 1/2 \tan \theta,$$

and

$$\beta = \varphi + \theta$$

wherein $\theta$ is the angle between the orientation (t) of the transmitting antenna of the transmitter (T) on the one hand and the direction from the transmitter (T) to the detector (R) in the plane defined in step e) on the other hand; and $\varphi$ is the angle between the direction from the transmitter (T) to the detector (R) on the one hand and the direction of the field strength vector (h) calculated in step d) on the other hand;
and
h) searching the transmitter (T) along the at least one potential search direction.

**2.** The method according to claim 1,
**characterized in that**
step g) includes the following partial step:

evaluating the equations

$$\tan \varphi = 1/2 \tan \theta,$$

and

$$\beta = (\varphi + \theta)$$

for determining values for the angles $\varphi$ and $\theta$.

3. The method according to claim 2,
   **characterized in that**
   the evaluation is numerically effected or effected by ascertaining the corresponding values from a table previously stored in the detector (R).

4. The method according to claim 1,
   **characterized in that**
   step g) includes the following partial step:

$$\text{setting } \varphi=\theta=\beta/2=(\varphi+\theta)/2.$$

5. The method according to any one of the preceding claims,
   **characterized in that**
   step h) includes the following step:
   continuously ascertaining the magnitude of the field strength vector (h), in particular ascertaining a local maximum of the magnitude of the field strength vector (h), along the search direction.

6. The method according to any one of claims 1 to 4,
   **characterized in that**
   step h) includes the following step:

   ascertaining the distance (r) between the transmitter (T) and the detector (R) from the result of step f) and the relation:

$$r = \sqrt[3]{\frac{IA}{4\pi h}\sqrt{(3cos^2\theta + 1)}},$$

   wherein r is the distance between transmitter (T) and detector (R), I is the current through the transmitting coil and A is the cross-section of the transmitting coil.

7. The method according to any one of the preceding claims,
   **characterized in that**
   step a) further includes the following step:
   ascertaining the spatial pose of the detector (R) related to the presettable coordinate system.

8. The method according to claim 7,
   **characterized in that**
   step g) further includes the following step:
   transforming the search direction ascertained in step g) in the plane to the presettable coordinate system.

9. The method according to any one of the preceding claims,

**characterized by** the following further step:

i) resolving ambiguities of the ascertained search direction by at least two measurements.

10. The method according to claim 9,
**characterized in that**
step i) includes the following test steps:

i1) ascertaining a potential search direction and a distance between detector (R) and transmitter (T), wherein the detector (R) is located at a first measurement point,
i2) moving the detector (R) to at least one second measurement point;
i3) ascertaining a potential search direction and the distance between detector (R) and transmitter (T), wherein the detector (R) is located at the second measurement point;
i4) evaluating the ascertained potential search directions and distances and determining the actual search direction.

11. The method according to claim 10,
**characterized in that**
step i4) includes the following test steps:

- if the distance increases upon a movement of the detector (R) into the ascertained search direction, while the ascertained search direction or the field direction changes at most by a presettable angle, the actual search direction is rotated by 180° to the ascertained search direction;
- if the distance decreases upon a movement of the detector (R) into the ascertained search direction, while the ascertained search direction or the field direction does not change or changes at most by a presettable angle, the actual search direction is equal to the ascertained search direction;
- if the distance changes at most by a presettable amount upon a movement of the detector (R) into the ascertained search direction, while the ascertained search direction or the field direction changes by at least a presettable angle,

the actual search direction is rotated to the right by 90° to the ascertained search direction if the ascertained search direction or the field direction rotates clockwise, or
the actual search direction is rotated to the left by 90° to the ascertained search direction, if the ascertained search direction or the field direction rotates counterclockwise.

12. The method according to claim 11,
**characterized in that**
a phase relation between the signal transmitted by the transmitter and the signal received by the detector is ascertained and evaluated, wherein step i4) includes the following steps:

- selecting a first and a second potential search direction due to the phase relation; and
- if the distance increases upon a movement of the detector (R) into the first or the second potential search direction, the actual search direction is rotated by 180° to the selected search direction,
- if the distance decreases upon a movement of the detector (R) into the first or the second potential search direction, the actual search direction is equal to the selected search direction.

13. The method according to claim 9,
**characterized in that**
step i) includes the following test steps:

i5) performing the steps a) to g) for a first detector (R1);
i6) performing the steps a) to g) for at least one second detector (R2);
i7) ascertaining the positions of the first and the at least one second detector (R1, R2);
i8) ascertaining potential positions of the transmitter (T) from the results of step i5), i6) and i7);
i9) selecting a matching value for a potential position of the transmitter (T) ascertained in step i8) and deriving the actual search direction for the first and/or the second detector (R1, R2).

14. The method according to any one of the preceding claims, **characterized by** the following further step:
j) displaying the ascertained search direction, or

the ascertained search direction and the ascertained distance between detector (R) and transmitter (T) on a display device of the detector (R).

15. The method according to any one of the preceding claims,
 **characterized in that**
 a coordinate system defined by the earth's magnetic field north axis and the acceleration of gravity is used as the presettable coordinate system.

16. The method according to any one of the preceding claims,
 **characterized in that**
 a carrier frequency of 868 MHz and/or 2.4 GHz is used for transfer in step c).

17. A detector for performing a method according to any one of the preceding claims.

**Revendications**

1. Procédé de recherche d'un appareil d'émission (T) avec un appareil de recherche (R), qui comprend au moins une antenne, destinée à recevoir un signal d'émission de l'appareil d'émission (T), l'appareil d'émission (T) comprenant au moins une antenne d'émission et le signal d'émission des impulsions d'émission, l'appareil d'émission (T) comprenant un appareil de détermination de position, destiné à définir l'orientation (t) de la au moins une antenne d'émission et l'appareil de recherche (R) un appareil de détermination de position, destiné à définir l'orientation de l'appareil de recherche (R),
 comprenant les étapes suivantes, consistant à :

 a) saisir l'intensité magnétique de champ (**h**) du champ, émis par la au moins une antenne d'émission de l'appareil d'émission (T) dans au moins deux dimensions ($h_t$, $h_r$) par le biais de l'appareil de recherche (R) ;
 b) déterminer l'orientation (**t**) de la au moins une antenne d'émission de l'appareil d'émission (T) par rapport à un système prédéfinissable de coordonnées ;
 c) transmettre l'orientation (**t**) de la au moins une antenne d'émission de l'appareil d'émission (T) à l'appareil de recherche (R) ;
 d) convertir l'intensité magnétique de champ (**h**), saisie au cours de l'étape a) dans au moins deux dimensions ($h_t$, $h_r$), en un vecteur d'intensité de champ (**h**), défini par leur valeur et leur direction ;
 e) définir un plan, qui est délimité d'une part par l'orientation (**t**) de l'antenne d'émission de l'appareil d'émission (T) et d'autre part par la direction du vecteur d'intensité de champ (**h**), calculé au cours de l'étape d) ;
 f) déterminer un angle $\beta$ comme étant l'angle entre la direction, déterminée au cours de l'étape d), du vecteur d'intensité de champ (**h**) et l'orientation (**t**) de l'antenne d'émission de l'appareil d'émission (T) ;
 g) déterminer au moins une direction potentielle de recherche dans le plan, défini au cours de l'étape e), à partir des relations :

$$\tan \varphi = \tfrac{1}{2} \tan \theta$$

 et

$$\beta = \varphi + \theta,$$

 $\theta$ étant l'angle entre l'orientation (**t**) de l'antenne d'émission de l'appareil d'émission (T) d'une part et la direction de l'appareil d'émission (T) par rapport à l'appareil de recherche (R) dans le plan, défini au cours de l'étape e) d'autre part et $\varphi$ l'angle entre la direction de l'appareil d'émission (T) par rapport à l'appareil de recherche (R), d'une part et la direction du vecteur d'intensité de champ (**h**), calculé au cours de l'étape d), d'autre part et
 h) rechercher l'appareil d'émission (T) le long de la au moins une direction potentielle de recherche.

2. Procédé selon la revendication 1,
 **caractérisé en ce que**
 l'étape g) comprend l'étape partielle suivante, consistant à :

évaluer les équations

$$\tan \varphi = \tfrac{1}{2} \tan \theta$$

et

$$\beta = (\varphi + \theta),$$

pour la définition de valeurs pour les angles $\varphi$ et $\theta$.

3.  Procédé selon la revendication 2,
    **caractérisé en ce que**
    l'évaluation a lieu numériquement ou par détermination des valeurs correspondantes à partir d'un tableau, sauvegardé auparavant dans l'appareil de recherche (R).

4.  Procédé selon la revendication 1,
    **caractérisé en ce que**
    l'étape g) comprend l'étape partielle suivante, consistant à :

$$\text{positionner } \varphi = \theta = \beta/2 = (\varphi + \theta)/2$$

5.  Procédé selon l'une des revendications précédentes,
    **caractérisé en ce que**
    l'étape h) comprend l'étape suivante, consistant à :
    déterminer continuellement la valeur du vecteur d'intensité de champ (**h**), en particulier déterminer un maximum local de la valeur du vecteur d'intensité de champ (**h**), le long de la direction de recherche.

6.  Procédé selon l'une des revendications 1 à 4,
    **caractérisé en ce que**
    l'étape h) comprend l'étape suivante, consistant à :
    déterminer l'éloignement (r) entre l'appareil d'émission (T) et l'appareil de recherche (R) à partir du résultat de l'étape f) et de la relation :

$$r = \sqrt[3]{\frac{IA}{4\pi h}} \sqrt{(3\cos^2\theta + 1)},$$

r étant l'éloignement entre l'appareil d'émission (T) et l'appareil de recherche (R), I le courant à travers la bobine émettrice et A la section de la bobine émettrice.

7.  Procédé selon l'une des revendications précédentes,
    **caractérisé en ce que**
    l'étape a) comprend en outre l'étape suivante, consistant à :
    déterminer la position dans l'espace de l'appareil de recherche (R) par rapport au système prédéfinissable de coordonnées.

8.  Procédé selon la revendication 7,
    **caractérisé en ce que**
    l'étape g) comprend en outre l'étape suivante, consistant à :
    transformer la direction de recherche, déterminée au cours de l'étape g) dans le plan, sur le système prédéfinissable de coordonnées.

9.  Procédé selon l'une des revendications précédentes,
    **caractérisé par** l'étape supplémentaire suivante, consistant à :
    i) lever les ambiguïtés de la direction de recherche déterminée par le biais d'au moins deux mesures.

**10.** Procédé selon la revendication 9,
**caractérisé en ce que**
l'étape i) comprend les étapes d'essai suivantes, consistant à :

i1) déterminer une direction potentielle de recherche et l'éloignement entre l'appareil de recherche (R) et l'appareil d'émission (T), l'appareil de recherche (R) se trouvant à un premier point de mesure ;
i2) déplacer l'appareil de recherche (R) à au moins un second point de mesure ;
i3) déterminer une direction potentielle de recherche et l'éloignement entre l'appareil de recherche (R) et l'appareil d'émission (T), l'appareil de recherche (R) se trouvant au second point de mesure ;
i4) évaluer les directions potentielles de recherche et éloignements déterminés et définir la direction effective de recherche.

**11.** Procédé selon la revendication 10,
**caractérisé en ce que**
l'étape i4) comprend les étapes d'essai suivantes :

- si, lors d'un déplacement de l'appareil de recherche (R) dans la direction de recherche déterminée, l'éloignement augmente, alors que la direction de recherche déterminée ou la direction du champ change au maximum d'un angle prédéfinissable, la direction effective de recherche tourne de 180° par rapport à la direction de recherche déterminée ;
- si, lors d'un déplacement de l'appareil de recherche (R) dans la direction de recherche déterminée, l'éloignement diminue, alors que la direction de recherche déterminée ou la direction du champ ne change pas ou au maximum d'un angle prédéfinissable, la direction effective de recherche est égale à la direction de recherche déterminée ;
- si, lors d'un déplacement de l'appareil de recherche (R) dans la direction de recherche déterminée, l'éloignement change au maximum d'une valeur prédéfinissable, alors que la direction de recherche déterminée ou la direction du champ change d'au moins un angle prédéfinissable,

la direction effective de recherche tourne de 90° vers la droite par rapport à la direction de recherche déterminée, si la direction de recherche déterminée ou la direction du champ tourne dans le sens des aiguilles d'une montre ou la direction effective de recherche tourne de 90° vers la gauche par rapport à la direction de recherche déterminée, si la direction de recherche déterminée ou la direction du champ tourne dans le sens inverse des aiguilles d'une montre.

**12.** Procédé selon la revendication 11,
**caractérisé en ce**
**qu'**une référence de phase est déterminée et évaluée entre le signal, émis par l'appareil d'émission et le signal, reçu par l'appareil de recherche, l'étape i4) comprenant les étapes suivantes, consistant à :

- sélectionner, sur la base de la référence de phase, une première et une seconde direction potentielle de recherche et
- si, lors d'un déplacement de l'appareil de recherche (R) dans la première ou la seconde direction potentielle de recherche, l'éloignement augmente, la direction effective de recherche tourne de 180° par rapport à la direction de recherche retenue ;
- si, lors d'un déplacement de l'appareil de recherche (R) dans la première ou la seconde direction potentielle de recherche, l'éloignement diminue, la direction effective de recherche est égale à la direction de recherche retenue.

**13.** Procédé selon la revendication 9,
**caractérisé en ce que**
l'étape i) comprend les étapes d'essai suivantes, consistant à :

i5) exécuter les étapes a) à g) pour un premier appareil de recherche (R1) ;
i6) exécuter les étapes a) à g) pour au moins un second appareil de recherche (R2) ;
i7) déterminer les positions du premier et du au moins un second appareil de recherche (R1, R2) ;
i8) déterminer les positions potentielles de l'appareil d'émission (T) à partir des résultats de l'étape i5), i6) et i7) ;
i9) sélectionner une valeur concordante pour une position potentielle de l'appareil d'émission (T), déterminée au cours de l'étape i8) et déduire la direction effective de recherche pour le premier et / ou le second appareil de recherche (R1, R2).

**14.** Procédé selon l'une des revendications précédentes,
**caractérisé par** l'étape supplémentaire suivante, consistant à :
j) afficher la direction de recherche déterminée ou la direction de recherche déterminée et l'éloignement déterminé entre l'appareil de recherche (R) et l'appareil d'émission (T) sur un dispositif indicateur de l'appareil de recherche (R).

**15.** Procédé selon l'une des revendications précédentes,
**caractérisé en ce**
**qu'**un système de coordonnées est utilisé comme système prédéfinissable de coordonnées par le biais de l'axe Nord du champ magnétique terrestre et de l'accélération gravitationnelle.

**16.** Procédé selon l'une des revendications précédentes,
**caractérisé en ce**
**qu'**une fréquence porteuse de 868 MHz et / ou de 2,4 GHz est utilisée pour la transmission au cours de l'étape c).

**17.** Appareil de recherche, destiné à exécuter un procédé selon l'une des revendications précédentes.

Fig.1

Fig.2

Fig.3

Fig.4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2573583 A1
- WO 0171388 A1

- CH 703345 A2